# EUROPEAN PATENT APPLICATION

(11) **EP 4 563 348 A1**
(43) Date of publication of application: **04.06.2025**
(21) Application number: 23857383.6
(22) Date of filing: 23.08.2023
(51) Int. Cl.: B32B 33/00, B32B 27/00, C09J 7/29, C09J 7/38

(54) **LAMINATE AND ADHESIVE TAPE COMPRISING LAMINATE**

(30) Priority: 24.08.2022 JP 2022133554
(71) Applicant: Diatex Co., Ltd., Tokyo 101-0035 (JP)
(72) Inventor: MIZUSHIMA, Yoichi, Kurobe-shi, Toyama 938-0013 (JP); SUGIMOTO, Yuichiro, Kurobe-shi, Toyama 938-0013 (JP); YOSHIOKA, Ryo, Kurobe-shi, Toyama 938-0013 (JP)
(74) Representative: Thoma, Michael
(86) International application number: PCT/JP2023/030306
(87) International publication number: WO 2024/043275

(57) **Abstract**

A multilayer body that can achieve an adhesive tape with a matte property and excellent designability, and also excellent adhesion to backing is provided. The multilayer body includes a support layer, and a surface resin layer provided on one primary surface side of the support layer, in which the surface resin layer has an uneven structure in which an exposed face on a side opposite to the support layer has a maximum height (Rz) of 7.0 µm or more.

## Description

### CROSS-REFERENCE TO RELATED APPLICATIONS

This application claims priority based on Japanese Patent Application No. 2022-133554 filed on August 24, 2022, the entire content of which is made a part of the disclosure herein by reference.

### TECHNICAL FIELD

The present invention relates to a multilayer body, and more specifically to a multilayer body that can be suitably used as a base material for a matte adhesive tape that can be pasted in an overlapping manner, and an adhesive tape including the multilayer body.

### BACKGROUND

The adhesive tape generally has a structure in which an adhesive agent layer is provided on one or both faces of a long support layer, and is widely used for packaging, repairing, curing, etc. The adhesive tape is applicable in the wide range, and in addition to adhesive properties such as adhesive strength and cohesion, designability may also be required. For example, when the adhesive tape is applied, a matte texture (matte property) with suppressed gloss (reflected light) may be required on its surface.

For example, Patent Document 1 discloses a matte adhesive tape with a surface having a 75-degree glossiness of 5% or less. In addition, Patent Document 2 discloses an adhesive tape with a surface having a 60-degree glossiness of 15% or less. Furthermore, cited Document 3 discloses an adhesive tape whose visible light regular reflectance is within 2.0%.

### PRIOR ART DOCUMENTS

### PATENT DOCUMENTS

Patent Document 1: JP-A-2013-159643
Patent Document 2: JP-A-2018-002898
Patent Document 3: JP-A-2013-087246

### SUMMARY OF THE INVENTION

The matte adhesive tapes described above all have a matte layer, a matte printed layer, or the like on a surface of a face on a side opposite to the adhesive agent layer (i.e., a face that forms a surface when the adhesive tape is applied to an adhesion body). When such matte adhesive tapes are applied in the overlapping manner, in some cases, the adhesive strength of the overlapped adhesive tape decreases. That is to say, the adhesive tapes with matte surfaces are sometimes inferior in adhesion to backing.

In view of this, it is an object of the present invention to provide a multilayer body that can achieve an adhesive tape with a matte property and excellent designability, and also excellent adhesion to backing. It is another object of the present invention to provide that adhesive tape.

It is generally known that the glossiness (matte property) is affected by an uneven structure of a surface. The present inventors have studied this issue in detail and found that when the uneven structure has a maximum height (Rz) at or above a certain value, the suitable matte property and excellent adhesion to backing can be obtained. The present invention has been made based on such findings. That is to say, the contents of the invention are as follows.

[1] A multilayer body comprising:
   a support layer; and
   a surface resin layer provided on one primary surface side of the support layer, wherein
   the surface resin layer has an uneven structure in which an exposed face on a side opposite to the support layer has a maximum height (Rz) of 7.0 µm or more.
[2] The multilayer body according to [1], wherein the exposed face of the surface resin layer on the side opposite to the support layer has a 60-degree surface glossiness of 10% or less.
[3] The multilayer body according to [1] or [2], wherein the surface resin layer has a thickness of 20 µm or more and less than 50 µm.
[4] The multilayer body according to any one of [1] to [3], wherein the surface resin layer and/or the support layer contains a colored pigment.
[5] The multilayer body according to any one of [1] to [4], wherein the support layer and/or the surface resin layer includes an olefin polymer.
[6] The multilayer body according to any one of [1] to [5], wherein the support layer includes a fabric body in which a linear body is knitted, woven, or cross-bonded.
[7] A method for manufacturing the multilayer body according to any one of [1] to [6], the method comprising:
   extruding melted resin to one primary surface side of the support layer; and
   shaping a surface of the resin with an embossing roller whose surface has a maximum height (Rz) of 4 to 20 µm before the resin is completely solidified.
[8] An adhesive tape comprising:
   the multilayer body according to any one of [1] to [6]; and
   an adhesive agent layer provided on a side of the multilayer body that is opposite to a face where the surface resin layer is provided.
[9] The adhesive tape according to [8], further comprising a laminate layer provided between the support layer and the adhesive agent layer.
[10] The adhesive tape according to [8] or [9], wherein an adhesive strength between the adhesive agent layer and the exposed face of the surface resin layer is 6.5 N/25 mm or more.

According to the multilayer body of the present invention, it is possible to obtain the adhesive tape that has the excellent adhesion to backing as well as the suitable matte property.

### BRIEF DESCRIPTION OF DRAWINGS

FIG. 1 is a perspective view of an adhesive tape wound body including a multilayer body according to a first embodiment of the present invention.
FIG. 2 is a cross-sectional view taken along line I-I in FIG. 1.
FIG. 3 is a schematic view illustrating a process of manufacturing the multilayer body according to the first embodiment of the present invention.
FIG. 4 is a cross-sectional schematic view of a linear body included in a fabric body.
FIG. 5 is a plan view of a support layer (woven fabric layer) included in the multilayer body according to the first embodiment of the present invention.
FIG. 6(A) is a cross-sectional view taken along line A-A in FIG. 5, and FIG. 6(B) is a cross-sectional view taken along line B-B in FIG. 5.
FIG. 7 is a plan view of a support layer (cross-bonded fabric layer) included in a multilayer body according to a second embodiment of the present invention.
FIG. 8 is a cross-sectional view taken along line C-C in FIG. 7.
FIG. 9 is a plan view of a support layer (woven fabric layer) included in a multilayer body according to a third embodiment of the present invention.
FIG. 10 is a cross-sectional view of a multilayer body according to a modification of the first to the third embodiments of the present invention.
FIG. 11 is a cross-sectional view of a modification of an embodiment of an adhesive tape including the multilayer body according to the first to the third embodiments of the present invention.
FIG. 12 is a cross-sectional view of an embodiment of an adhesive tape including a multilayer body according to a fourth embodiment of the present invention.

### DESCRIPTION OF THE PREFERRED EMBODIMENTS

Embodiments of a multilayer body according to the present invention and an adhesive sheet including the multilayer body will hereinafter be described based on the drawings. Note that, regarding the multilayer body according to the embodiments of the present invention, the embodiment in a case where a fabric body included in a support layer is a woven fabric in which warp and weft are woven is referred to as a multilayer body 1A, the embodiment in a case where the fabric body is a cross-bonded fabric (sackcloth) in which warp and weft are cross-attached is referred to as a multilayer body 1B, and the embodiment in a case where the fabric body is a knitted fabric in which warp and weft are knitted is referred to as a multilayer body 1C.

### <First Embodiment>

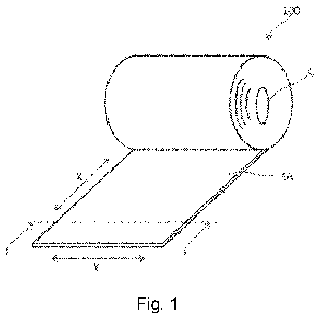

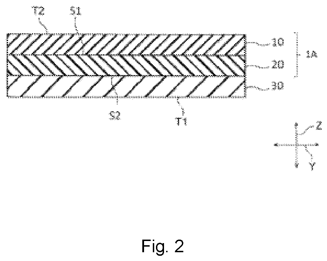

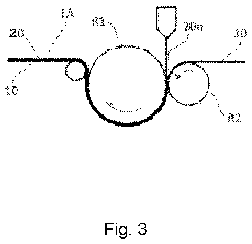

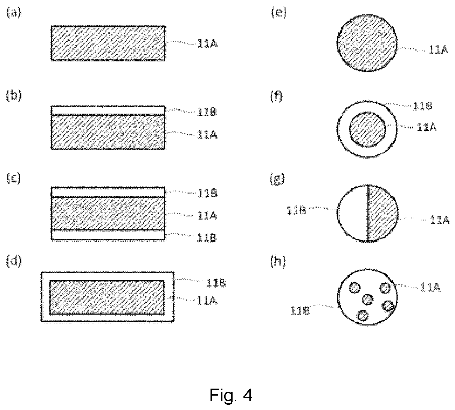

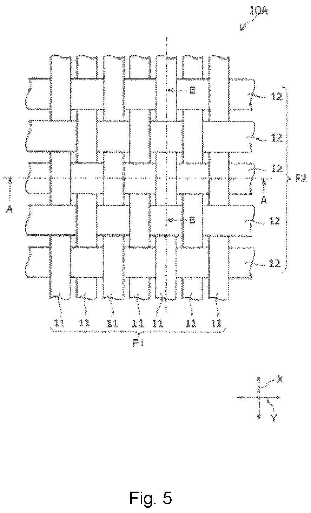

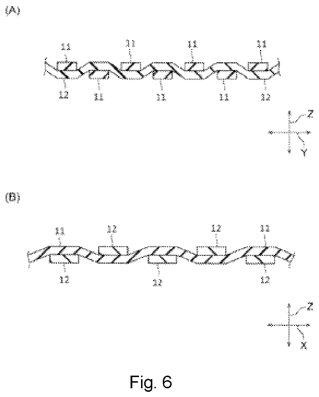

An adhesive tape 1A according to an embodiment of the present invention is described below based on FIG. 1 to FIG. 6. FIG. 1 is a perspective view of a wound body of an adhesive tape including the multilayer body 1A. FIG. 2 is a cross-sectional view taken along line I-I in FIG. 1. FIG. 3 is a schematic view for describing a manufacturing process when a surface resin layer is provided on a support layer. FIG. 4 is a cross-sectional schematic view of a linear body included in a fabric body. FIG. 5 is a plan view of the support layer included in the multilayer body 1A. FIG. 6(A) is a cross-sectional view taken along line A-A in FIG. 4, and FIG. 6(B) is a cross-sectional view taken along line B-B in FIG. 4.

As illustrated in FIG. 1 to FIG. 6, the multilayer body 1A has a long-side direction X, a short-side direction Y, and a thickness direction Z that are orthogonal to each other. Note that a long-side direction, a short-side direction, and a thickness direction of layers included in the multilayer body 1A coincide with the long-side direction X, the short-side direction Y, and the thickness direction Z, respectively, of the adhesive tape wound body including the multilayer body 1A illustrated in FIG. 1.

As illustrated in FIG. 1, the adhesive tape including the multilayer body 1A is preferably provided in the form of an adhesive tape wound body 100, which is formed in such a way that the adhesive tape is wound around a core material C with a cylindrical columnar or cylindrical tubular shape. However, the core material C can be omitted, and an embodiment in which the core material C is omitted from the adhesive tape wound body 100 is also included in the present invention.

The diameter of the core material C is not particularly limited, and is usually 1.0 cm or more and 20.0 cm or less, preferably 2.0 cm or more and 10.0 cm or less, and more preferably 2.5 cm or more and 8.0 cm or less. The length of the core material C (length in the short-side direction Y) is not particularly limited, and is usually about the same as the width of the adhesive tape including the multilayer body 1A, or larger than the width of the adhesive tape.

The material included in the core material C is not limited in particular, and any known core material can be used. The material included in the core material C may be, for example, metal, resin, wood, paper, or the like.

As illustrated in FIG. 2, the multilayer body 1A includes a support layer 10 and a surface resin layer 20 provided on one primary surface side S1 of the support layer 10. The adhesive tape including the multilayer body 1A also includes an adhesive agent layer 30 provided on a primary surface side S2 opposite to the support layer 10 side of the surface resin layer 20 in the multilayer body 1A.

As illustrated in FIG. 2, one primary surface T1 of the adhesive tape including the multilayer body 1A is formed by the adhesive agent layer 30, and the other primary surface T2 of the multilayer body 1A is formed by the surface resin layer 20.

The adhesive tape including the multilayer body 1A is usually torn in the short-side direction Y, and the resulting pieces of the adhesive tape are used for packaging, repair, curing, airtight waterproofing applications, etc.

### [Surface Resin Layer]

The surface resin layer 20, which is provided on one primary surface side of the long support layer 10, has a long form extending in the long-side direction **X.** The surface resin layer 20 is usually flexible.

The surface resin layer 20 has an uneven structure with a maximum height (Rz) of 7.0 µm or more on the exposed face T2 on the opposite side of the support layer 10. Since the surface T2 of the surface resin layer 20 has a specific uneven structure, it is possible to achieve the adhesive tape that has a suitable matte property and excellent adhesion to backing. If the surface T2 of the surface resin layer 20 has an Rz of less than 7.0 µm, it is insufficient to suppress the glossiness of the surface; accordingly, the adhesive tape cannot have the suitable matte property. If the surface T2 of the surface resin layer 20 has Rz of less than 7.0 µm, the adhesion to backing, which is the adhesive strength when the tapes are applied in the overlapping manner, will decrease rapidly. The preferred range of Rz of the surface T2 of the surface resin layer 20 is 11 µm or more and 20 µm or less. If the value of Rz of the surface T2 of the surface resin layer 20 is too large, scratches on the surface T2, if they occur, will easily stand out.

The maximum height (Rz) in the present invention can be measured using a non-contact 3D shape measuring machine. A non-contact 3D shape measuring machine that complies with vertical scanning low coherence interferometry can be used as the non-contact 3D shape measuring machine. Specifically, the maximum height (Rz) of the surface resin layer surface can be measured using, for example, Nexview manufactured by ZYGO Corporation or its equivalent product under the following measurement conditions.
- Measurement environment: 23°C, 50%RH
- Lens magnification: 20 times
- Digital zoom: 0.5 times
- Scan length: 100 µm
- Type: Surface
- Mode: CSI-Rough
- Z Resolution: High

The multilayer body according to the present invention has low glossiness because the exposed face T2 on the opposite side of the support layer 10 has the specific uneven structure as described above, which enables the adhesive tape to have the suitable matte property. The 60-degree surface glossiness (Gs(60°)) of the surface T2 of the surface resin layer 20 is preferably 10% or less, more preferably 5% or less, and particularly preferably 1% or less. Note that Gs(60°) is measured in accordance with JIS Z8741:1997. Specifically, the measurement is carried out using a gloss meter at an angle of incidence = 60 degrees.

Although there is no particular limitation as to the method of forming the surface resin layer 20 whose surface T2 has the uneven structure as described above, when the multilayer body 1A is manufactured, as illustrated in FIG. 3, an embossing roll R1 with its outer peripheral surface embossed is pressed against the exposed face T2 of the surface resin layer 20 on the opposite side of the support layer after extrusion lamination to one primary surface side of the support layer 10, so that the surface of the face T2 is shaped; thus, the desired uneven structure can be obtained. That is to say, resin 20a discharged from an extruder is extruded and laminated onto the surface of the support layer 10 conveyed while being cooled by the embossing roll R1 and a contact pressure roll R2, and at the same time, the uneven structure on the outer peripheral surface of the embossing roll R1 is applied to the resin surface to form the surface resin layer 20. Rz of the surface T2 of the surface resin layer 20 can be controlled to be 7.0 µm or more by adjusting the degree of embossing on the outer peripheral surface of the emboss roll R1 to be used, the distance (pressing force) between the embossing roll R1 and the contact pressure roll R2, and the thickness of the surface resin layer 20 as appropriate.

The maximum height (Rz) of the surface of the embossing roll R1 is preferably 4 to 20 µm, and more preferably 4.5 to 19 µm. The pressing force between the embossing roll R1 and the contact pressure roll R2 is preferably 0.001 to 1 MPa and more preferably 0.01 to 0.5 MPa. The temperature of the surface resin layer 20 immediately before the uneven structure is formed by the embossing roll R1 (shaping temperature) depends on the type of resin included in the surface resin layer and is preferably about 220°C to 330°C, more preferably 230°C to 320°C, and still more preferably 240°C to 310°C.

When the embossing roll R1 applies the uneven structure to the surface of the surface resin layer 20 in the process as illustrated in FIG. 3, the thickness of the surface resin layer 20 is also an important factor. The thickness of the surface resin layer is preferably 20 µm or more and less than 50 µm, and more preferably 25 µm or more and 40 µm or less.

The materials included in the surface resin layer are not limited in particular as long as they are thermoplastic resins. Examples thereof include olefin polymers (for example, low-density polyethylene, linear low-density polyethylene, high-density polyethylene, ethylene-α-olefin copolymers such as ethylene-propylene copolymer, ethylene-vinyl acetate copolymer, polypropylene, and the like), polyesters (for example, polyethylene terephthalate, polybutylene terephthalate, and the like), polyamides (for example, nylon 6, nylon 66, and the like), polyvinyl chloride, polyurethane, and the like. Olefin polymers are preferred. When tearability is important, low-density polyethylene or linear low-density polyethylene is preferred among olefin polymers. Plant-derived polyolefins (also referred to as "biopolyolefins") may also be used as the olefin polymers. A polyolefin derived from plants is the polyolefin in which at least part of olefin monomers constituting the polyolefin is formed of olefins derived from plants, while a polyolefin derived from fossil fuels is the polyolefin in which all of the olefin monomers constituting the polyolefin are formed of olefins derived from petroleum or other fossil fuels.

Plant-derived olefins include ethylene or propylene derived from plants. Plant-derived ethylene can be manufactured by, for example, dehydration of ethanol produced by fermentation of biomass derived from plants such as sugarcane or corn. Plant-derived propylene can be manufactured by, for example, dehydration of propanol produced by fermentation of biomass. If the biomass is carbohydrates such as starch, sugars obtained by hydrolyzing the carbohydrates may be fermented.

Biopolyolefins may be produced by known methods or commercially available biopolyolefins may be used. Examples of biopolyolefins include polyethylene, which is a polymer of ethylene derived from plants, and polypropylene, which is a polymer of propylene derived from plants. When biopolyolefins contain α-olefin such as 1-butene, 1-hexene, or 1-octene as a comonomer, these α-olefins may be either α-olefins manufactured by methods derived from biomass such as plants or α-olefins derived from fossil fuels.

The density of low-density polyethylene or linear low-density polyethylene is usually 0.870 g/cm³ or more and 0.942 g/cm³ or less and preferably 0.875 g/cm³ or more and 0.936 g/cm³ or less. The density of high-density polyethylene is usually 0.940 g/cm³ or more and 0.970 g/cm³ or less and preferably 0.940 g/cm³ or more and 0.960 g/cm³ or less. In general, polyethylene with lower density has lower mechanical strength and polyethylene with higher density has lower flexibility.

In addition to the thermoplastic resin described above, the surface resin layer 20 may contain one kind or two or more kinds of additives as needed. Examples of the additives include antioxidants, light stabilizers, UV absorbers, antistatic agents, dispersants (for example, bisamide-based, wax-based, organometallic salt-based, etc.), lubricants (e.g., bisamide-based, wax-based, organometallic salt-based, ester-based, etc.), flame retardants, fillers, colored pigments, dyes, and antibacterial agents.

The colored pigments and/or dyes are used to make the surface of the multilayer body 1A a desired color, and can be achromatic pigments and dyes of black, white, and gray, as well as chromatic pigments and dyes with colors such as red, blue, green, and yellow.

The content of the colored pigment and/or the dye is preferably 1 mass% or more and 40 mass% or less of the thermoplastic resin. When the content is less than this, it may be insufficient to impart the desired color tone, and when the content is greater than this, the color tone will not improve and rather the cost increases.

In order to adjust Rz and Gs(60°) of the surface T2 of the surface resin layer 20 as appropriate, a filler such as silica, calcium carbonate, magnesium carbonate, mica, alumina, kaolin, clay, aluminum hydroxide, zinc oxide, barium sulfate, or calcium sulfate may be included as a matte material.

### [Support Layer]

As illustrated in FIG. 4, the support layer 10 preferably includes a fabric body (woven fabric layer 10A) in which linear bodies are used as warp 11 and weft 12 and the warp 11 and the weft 12 are woven. By using the linear bodies in the support layer 10, the tensile strength of the multilayer body increases. When the multilayer body is used as the adhesive tape and the adhesive tape is pulled out or applied again to its back surface, even if the adhesion to the back surface is high, the multilayer body will not stretch or be torn, and accordingly, the physical properties as the adhesive tape is excellent.

The linear bodies that form the warp 11 and the weft 12 may be monofilaments, tapes, yarns, split yarns, multifilaments, staple fibers, etc. Among these, flat yarns in a tape form are preferred. Such flat yarns can also be made into split yarns by making numerous small cuts in the long-side (vertical) direction.

The linear body may be unstretched, but it is preferred that the linear body is stretched. Stretching may be either uniaxial or biaxial stretching. Stretching may be stretching with a hot roll, stretching with a hot plate, stretching with a roll in a hot air oven, etc. A stretching magnification is usually 3 times or more and 12 times or less and preferably 5 times or more and 10 times or less.

Preferred aspects of cross-sectional shapes of the warp yarn 11 that is formed by a flat yarn are illustrated in FIG. 4(a) to FIG. 4(d). Preferred aspects of cross-sectional shapes of the warp yarn 11 that is formed by a monofilament are illustrated in FIG. 4(e) to FIG. 4(h). FIG. 4(a) illustrates an example of the flat yarn composed of a single layer, FIG. 4(b) illustrates an example in which a bonding layer 11B is stacked on one surface of a base layer 11A, FIG. 4(c) illustrates an example in which the bonding layer 11B is stacked on both surfaces of the base layer 11A, and FIG. 4(d) illustrates an example of a core-sheath structure in which the base layer 11A is a core material and the bonding layer 11B is a sheath.

FIG. 4(e) illustrates an example in which the monofilament is composed of a single yarn, FIG. 4(f) illustrates an example of the core-sheath structure in which the base layer 11A is the core material and the bonding layer 11B is the sheath, FIG. 4(g) illustrates an example of a side-by-side structure in which the bonding layer 11B is provided on one side of the base layer 11A in the width direction, and FIG. 4(h) illustrates an example of a sea-island structure in which the base layer 11A is an island and the bonding layer 11B is a sea.

The bonding layer 11B preferably includes a thermoplastic resin with a lower melting point and higher thermal fusibility than the thermoplastic resin included in the base layer 11A. The bonding layer 11B can be made of a thermoplastic resin with a melting point of 10°C or more, preferably 15°C or more, lower than the thermoplastic resin included in the base layer 11A. In this specification, "the melting point" means the melting peak temperature measured by differential scanning calorimetry (DSC) at a temperature increase rate of 10°C/min.

From the viewpoint of lowering the melting point of the thermoplastic resin material included in the bonding layer 11B by 15°C or more compared to that of the thermoplastic resin material included in the base layer 11, it is preferable that the thermoplastic resin material included in the base layer 11 contains high-density polyethylene and the thermoplastic resin material included in the bonding layer 11B contains low-density polyethylene.

Although the embodiment of the linear body is described using the warp yarn 11 as an example, the weft yarn 12 can also have the similar structure.

As for the materials of the warp yarn 11 and the weft yarn 12, there is no particular limitation as long as they are thermoplastic resins, and the material similar to that of the support layer of known adhesive tapes can be used. However, the linear body included in the support layer 10 is preferably formed of the thermoplastic resin. The thermoplastic resin is not particularly limited. For example, olefin polymers such as high-density polyethylene, low-density polyethylene, linear low-density polyethylene, polypropylene, and ethylene-propylene block copolymers, polyesters such as polyethylene terephthalate and polybutylene terephthalate, polyamides such as nylon 6 and nylon 66, polyacrylic resin, and vinylidene chloride resin can be used. In particular, the olefin polymer is preferably used. The above-described biopolyolefin may also be used as the olefin polymer. The use of biopolyolefin reduces the environmental impact compared to the use of thermoplastics derived from fossil fuel.

High-density polyethylene, low-density polyethylene, or linear low-density polyethylene is preferable for the olefin polymers, high-density polyethylene or low-density polyethylene is more preferable, and high-density polyethylene is still more preferable. The densities of high-density polyethylene, low-density polyethylene, and linear low-density polyethylene are similar to those described above.

Next, the fabric body formed by weaving the warp and the weft is described. When the fabric body is a woven fabric made of the warp and the weft, in the woven fabric layer 10A that forms the support layer 10, a warp yarn group F1 is formed by the warp 11 extending in the long-side direction X as illustrated in FIG. 5. The warp 11 that form the warp yarn group F1 extend in parallel or substantially parallel to each other and in the long-side direction X as illustrated in FIG. 5.

A weft yarn group F2 includes the weft 12 extending in a direction that intersects with the long-side direction X as illustrated in FIG. 5. The weft 12 that form the weft yarn group F2 extend in parallel or substantially parallel to each other and in the direction that intersects with the long-side direction **X.**

In this embodiment, as illustrated in FIG. 5, the angle between the axis of each weft yarn 12 and the long-side direction X is 90°. However, the angle between the axis of each weft yarn 12 and the long-side direction X is not limited to 90° as long as the support layer can be formed. The angle between the axis of each weft yarn 12 and the long-side direction X is usually 85.4° or more and 90° or less, preferably 86.5° or more and 90° or less, and more preferably 87.7° or more and 90° or less.

In this embodiment, as illustrated in FIG. 5, the warp 11 included in the warp yarn group F1 and the weft 12 included in the weft yarn group F2 are woven into a plain weave. In other words, in this embodiment, the support layer 10 is formed by the woven fabric layer 10A of a plain weave. However, the woven fabric layer 10A included in the support layer 10 is not limited to the plain woven fabric. The woven fabric layer 10A may be composed of, for example, a twill weave, a diagonal weave, a ridge weave, a double weave, etc. The fabric may be woven by using thin flat yarns as the warp 11 and the overlapped weft 12. Thus, the adhesive tape flexible enough to be cut easily with hands can be obtained.

As illustrated in FIG. 6(A) and FIG. 6(B), the cross-sectional shape of each warp yarn 11 taken along a plane perpendicular to its extension direction (axis) and the cross-sectional shape of each weft yarn 12 taken along a plane perpendicular to its extension direction (axis) are both substantially rectangular in shape. In this embodiment, as illustrated in FIG. 6, the one primary surfaces of the weft 12 are in contact with the other primary surfaces of the warp 11 and the other primary surfaces of the weft 12 are in contact with the one primary surfaces of the warp 11.

The thread count of the warp 11 included in the warp yarn group F1 can be adjusted as appropriate and is usually 20 or more and 55 or less threads/inch, preferably 25 or more and 50 or less threads/inch, and more preferably 28 or more and 47 or less threads/inch.

The thread count of the weft 12 can be adjusted as appropriate, and is usually 10 or more and 25 or less threads/inch, preferably 12 or more and 23 or less threads/inch, and more preferably 14 or more and 20 or less threads/inch.

The thread count of the warp 11 is preferably greater than the thread count of the weft 12. Thus, it is possible to effectively reduce the tear strength and maintain or enhance the tensile strength of the adhesive tape including the multilayer body 1A.

In the multilayer body 1A, the weft 12 are usually arranged at regular intervals in the width direction because the warp 11 are usually broken between two adjacent weft 12.

The average fineness of the weft 12 can be adjusted as appropriate, and is usually 50 dt or more and 1000 dt or less, preferably 200 dt or more and 400 dt or less, and more preferably 250 dt or more and 360 dt or less. If the average fineness of a plurality of flat yarns 32 included in a second flat yarn group F2 is within the above-described range, when the adhesive tape including the multilayer body 1A is cut by hands in the short-side direction Y, the flat yarns 32 included in a second flat yarn group F2 can be prevented from being torn.

The thickness of the weft yarn 12 is not particularly limited, and is usually 10 µm or more and 40 µm or less, preferably 18 µm or more and 36 µm or less, and more preferably 26 µm or more and 33 µm or less. By setting the thickness of the weft yarn 12 within the above range, delamination between the support layer and the surface resin layer or any laminate layer described below can be further suppressed.

The average fineness of the warp 11 can be adjusted as appropriate, and is usually 50 dt or more and 1000 dt or less, preferably 50 dt or more and 250 dt or less, and more preferably 60 dt or more and 150 dt or less. The warp yarn cut into a length of 1 m is weighed, and the obtained value is multiplied by 10000, and the resulting value is the warp yarn fineness. The average value of the fineness of 10 warp is defined as the average fineness.

The thickness of the warp yarn 11 is not particularly limited, and is usually 8 µm or more and 26 µm or less, preferably 10 µm or more and 24 µm or less, and more preferably 12 µm or more and 22 µm or less. By setting the thickness of the warp yarn 11 within the above range, delamination between the support layer and the surface resin layer or any laminate layer described below can be further suppressed.

The average interval of the warp 11 can be adjusted as appropriate, and is usually 1.0 mm or less, preferably 0.5 mm or less, and more preferably 0.1 mm or less. The intervals of the warp 11 may be reduced to the extent that the warp 11 overlap with each other. The lower limit is not limited in particular.

The average fineness of the warp 11 is preferably smaller than the average fineness of the weft 12. Thus, it is possible to effectively reduce the tear strength and maintain or enhance the tensile strength of the adhesive tape including the multilayer body 1A. The ratio of the average fineness of the warp 11 to the average fineness of the weft 12 is preferably 1:2.0 to 1:4.5, more preferably 1:2.0 to 1:4.0, and still more preferably 1:2.0 to 1:3.5.

The thermoplastic resin materials included in the linear bodies that form the warp and the weft may contain one kind, or two or more kinds of additives as needed. Specific examples of the additive may include: antioxidants such as phenol-based, organophosphite-based, organophosphorus-based, such as phosnite, and thioether-based; light stabilizers such as hindered amine; UV absorbers such as benzophenone-based, benzotriazole-based, and benzoate-based; antistatic agents such as nonion-based, cation-based, and anion-based; dispersants such as bisamide-based, wax-based, and organometallic salt-based; lubricants such as amide-based, wax-based, organometallic salt-based, and ester-based; flame retardants such as bromine-containing organic-based, melamine-based, phosphate-based, phosphate ester-based, antimony trioxide-based, magnesium hydroxide-based, and red phosphorus-based; organic pigments; inorganic pigments; and inorganic and organic antibacterial agents such as metal ion-based.

### [Adhesive Agent Layer]

By providing the adhesive agent layer 30 on a side of the multilayer body 1A that is opposite to a face where the surface resin layer 20 is provided, the adhesive tape can be obtained. The adhesive agent layer is a layer formed of an adhesive agent. The adhesive agent included in the adhesive agent layer 30 is not particularly limited, and the adhesive agent similar to the adhesive agent in the adhesive agent layer of the known adhesive tapes can be used. The adhesive agent layer 30 may be formed by one kind of adhesive agent or two or more kinds of adhesive agents. Examples of the adhesive agent include acrylic resin-based adhesive agents, rubber-based adhesive agents (for example, natural rubber-based adhesive agents, synthetic rubber-based adhesive agents, or the like), block copolymer-based adhesive agents (for example, styrenebutadiene-styrene block copolymers, styrene-isoprene-styrene block copolymers, hydrogenated block copolymer-based adhesives corresponding to these, or the like), ethylene-vinyl acetate copolymer-based adhesive agents, polyvinyl ether resin-based adhesive agents, silicone resin-based adhesive agents, and the like. Among these, acrylic resin-based adhesive agents are preferred. The acrylic resin-based adhesive agents have excellent durability and weather resistance and are less contaminated during handling.

Examples of the acrylic resin-based adhesive agents include adhesive agents obtained by polymerizing a monomer material including a carboxyl group-containing polymerizable monomer or a (meth)acrylic acid alkyl ester monomer. The term "(meth)acrylic acid" means acrylic acid or methacrylic acid.

The carboxyl group-containing polymerizable monomer is a radical polymerizable monomer having one or more carboxyl groups or salts of carboxyl groups and one or more carbon-carbon unsaturated double bonds. Examples of the carboxyl group-containing polymerizable monomer include monocarboxylic acids (for example, acrylic acid, methacrylic acid, crotonic acid, itaconic acid, and the like), dicarboxylic acids (for example, fumaric acid, maleic acid, and the like) and monoesters of dicarboxylic acids, and acrylic acid or methacrylic acid is preferred. The amount of carboxyl group-containing polymerizable monomer is, for example, about 1 to 20 wt% of the total monomer material.

The carbon number of the alkyl group of the (meth)acrylic acid alkyl ester monomer is about 4 to 12, for example. Examples of the (meth)acrylic acid alkyl ester monomer include n-butyl (meth)acrylate, isobutyl (meth)acrylate, n-octyl (meth)acrylate, isooctyl (meth)acrylate, 2-ethylhexyl (meth)acrylate, and isononyl (meth)acrylate. Among these, n-butyl acrylate or 2-ethylhexyl acrylate is preferred.

The monomer materials including the carboxyl group-containing polymerizable monomer or the (meth)acrylic acid alkyl ester monomer may include a small amount of monomer that can be copolymerized with another monomer for the purpose of modifying the adhesive agent (for example, adjusting glass transition temperature, polarity, etc. of the adhesive agent). Examples of such a monomer include methyl (meth)acrylate, ethyl (meth)acrylate, acrylamide, vinyl acetate, styrene, acrylonitrile, and vinyl pyrrolidone.

The adhesive agent layer 30 preferably contains, along with the adhesive agent such as an acrylic resin-based adhesive agent, a multifunctional compound having two or more functional groups that react with a carboxyl group, etc. in the molecule, or a monofunctional compound having one functional group that reacts with a carboxyl group, etc. in the molecule as a cross-linking agent. Examples of such a cross-linking agent include isocyanate compounds, epoxy (or glycidyl) compounds, aziridinyl compounds, metal chelate compounds, and melamine compounds.

The form of the adhesive agent is not limited unless the function as the adhesive agent is interfered, and may be, for example, a solution type adhesive agent, an emulsion type adhesive agent, a hot-melt type adhesive agent, a reactive type adhesive agent, a photopolymerizable monomer type adhesive agent, or any other type.

The adhesive agent layer 30 may contain one kind, or two or more kinds of additives as needed. Examples of the additives include cross-linking agents (for example, polyisocyanate compounds, aziridine compounds, metal chelate compounds, and the like), adhesion applying agents, coupling agents, fillers, softeners, plasticizers, surfactants, antioxidants, heat stabilizers, light stabilizers, UV absorbers, coloring agents, defoamers, flame retardants, antistatic agents, discoloration inhibitors, etc.

Examples of the plasticizers that can be contained in the adhesive agent layer 30 include esters of aliphatic polyvalent carboxylic acids, esters of aromatic polyvalent carboxylic acids, low molecular plasticizers such as phosphate esters, and high molecular plasticizers such as polyesters, etc. Esters of aliphatic dibasic acids are preferred, and adipic acid diesters are more preferred. The amount of plasticizer is, for example, about 0.05 to 4 wt%.

Examples of the discoloration inhibitors that can be contained in the adhesive agent layer 30 include a benzotriazole compound. The benzotriazole compound is known to prevent corrosion of metals, and thus, it is possible to prevent discoloration due to corrosion of metals to which the adhesive tape is applied. The amount of benzotriazole compound is, for example, about 0.01 to 5 wt%.

The thickness of the adhesive agent layer 30 can be adjusted as appropriate, and if the thickness of the adhesive agent layer 30 is too small, the adhesive tape may have insufficient adhesion to rough surfaces and unevenness follow-up properties, while if the thickness of the adhesive agent layer 30 is too large, the increase in adhesiveness may not be commensurate with the increase in cost. The thickness of the adhesive agent layer 30 is preferably 10 µm or more and 0.5 mm or less.

As the method for forming the adhesive agent layer of the adhesive tape, publicly known general manufacturing methods for the adhesive tapes can be used. Examples thereof include a method in which the adhesive agent is applied and dried on a face (for example, one face of the support layer) where the adhesive agent layer will be formed, and a method in which the adhesive agent is applied and dried on one face of a release liner to form the adhesive agent layer and the multilayer body is overlapped on the surface of the formed adhesive agent layer. The drying conditions for the adhesive agent are usually 70 to 100°C for 1 to 5 minutes, and after drying, the adhesive agent is preferably aged at 10 to 40°C for about 1 to 20 days.

### <Second Embodiment>

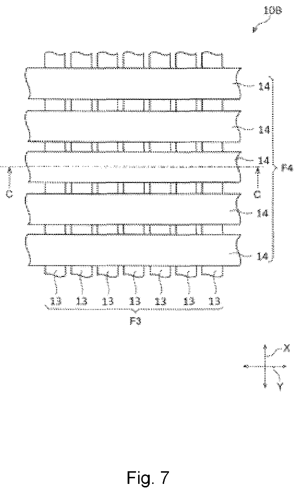

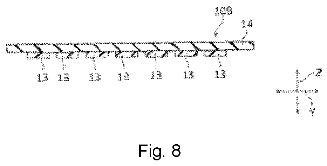

The multilayer body 1B according to an embodiment of the present invention is described below based on FIG. 7 and FIG. 8. The surface resin layer and the adhesive agent layer that form the multilayer body 1B are similar to those of the multilayer body 1A in the embodiment of the present invention, and therefore, the description is omitted.

The support layer included in the multilayer body 1B in this embodiment is formed of a fabric body made of cross-bonded fabric (sackcloth) in which warp 13 and weft 14 are cross-bonded using linear bodies as the warp 13 and the weft 14. FIG. 7 is a plan view of a cross-bonded fabric layer 10B, and FIG. 8 is a cross-sectional view taken along line C-C in FIG. 7.

As illustrated in FIG. 7 and FIG. 8, the cross-bonded fabric layer 10B is a layer formed by thermally fusing a warp yarn group F3 to one side of a weft yarn group F4 (bottom side in FIG. 8). The warp yarn group F3 includes a plurality of flat yarns 13 extending in the long-side direction **X.** The weft yarn group F4 includes a plurality of flat yarns 14 extending in a direction intersecting with the long-side direction **X.** The flat yarn 13 is formed of a single-layer flat yarn, and the flat yarn 14 is formed of a flat yarn including a base layer and a bonding layer provided on one or both primary surface sides of the base layer. The surface layer of the flat yarns 14 included in the weft yarn group F4 is thermally fused to the flat yarns 13 included in the warp yarn group F3.

The single-layer flat yarn may be in the form illustrated in FIG. 4(a) described above, and the flat yarn including the base layer and the bonding layer provided on one or both primary surface sides of the base layer may be in the form illustrated in FIG. 4(b) to FIG. 4(d) described above.

Compared to the multilayer body 1A, the multilayer body 1B generally has lower tensile strength and higher tear strength. One reason for this is that in the multilayer body 1A, the flat yarns are interwoven, so the yarns are more fixed to each other in the support layer 10.

### <Third Embodiment>

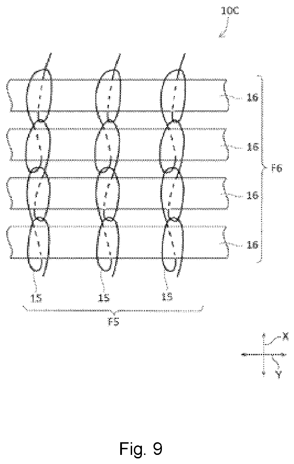

The multilayer body 1C according to an embodiment of the present invention is described below based on FIG. 9. The surface resin layer and the adhesive agent layer included in the multilayer body 1C are similar to those of the multilayer body 1A according to the embodiment of the present invention; therefore, the description is omitted.

The support layer 10 included in the multilayer body 1C according to this embodiment includes a fabric body formed of a knitted fabric in which linear bodies are used as warp 15 and weft 16, the warp 15 are knitted independently, and the weft 16 are inserted. FIG. 9 is a plan view of a knitted fabric layer 10C.

As illustrated in FIG. 9, the knitted fabric layer 10C is a layer formed by inserting a weft yarn group F6 into a warp yarn group F5 in which the warp 15 are independently knitted. The warp yarn group F5 includes a plurality of multifilaments 15 extending in the long-side direction **X.** The weft yarn group F6 includes the flat yarns 16 extending in a direction intersecting with the long-side direction **X.** The multifilaments 15 are knitted alone, into which the flat yarns 16 are inserted in weft. By forming the knitted fabric, the warp 15 are firmly fixed, and as a result, the weft 16 are also firmly fixed.

The thread count of the warp 15 included in the warp yarn group F5 can be adjusted as appropriate, and is usually 10 or more and 40 or less threads/inch in order to obtain the suitable base material strength and facilitate the cutting with hands.

The warp yarn 15 may be a multifilament formed of the linear body including the above-mentioned thermoplastic resin as the material. In addition to the linear body including the thermoplastic material only, multifilaments formed of cotton yarns, cross-twisted yarns with spun yarns, etc., can also be used suitably.

The average fineness of the warp 15 can be adjusted as appropriate, and an average fineness of 10 dt or more and 1000 dt or less, preferably 20 dt or more and 500 dt or less provides a good balance of base material strength, easy cutting with hands, and elongation.

The average fineness of the flat yarns, which are the weft 16, can be adjusted as appropriate, and is 50 dt or more and 1000 dt or less, and preferably 100 dt or more and 500 dt or less.

The single-layer flat yarn may be in the form illustrated in FIG. 4(a) described above, and the flat yarn including the base layer and the bonding layer provided on one or both primary surface sides of the base layer may be in the form illustrated in FIG. 4(b) to FIG. 4(d) described above.

When the knitted fabric layer 10C described above is used as the support layer 10, the knitted fabric layer 10C is preferably subjected to a physical or chemical anchoring process (AC process). The physical process includes a corona process, a UV process, a sputtering process, and the like while the chemical process includes the application of resins selected from organotitanium, isocyanate, polyethyleneimine, polybutadiene resins, and the like. Without these AC processes, the adhesion between the knitted fabric layer 10C and the surface resin layer 20 will be insufficient. When the formed adhesive tape is cut with hands, the linearity becomes insufficient and the warp yarn tends to appear as fluff at the fractured surface; accordingly, the appearance may become poor.

### <Modifications of First to Third Embodiments>

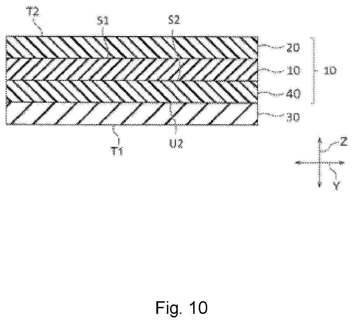

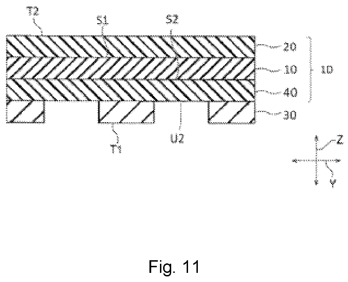

Modifications of the embodiments of the adhesive tape including the multilayer body of the first to the third embodiments of the present invention will be described based on FIG. 10 and FIG. 11. FIG. 10 and FIG. 11 are cross-sectional views of adhesive tapes each including a multilayer body 1D according to a modification of the first and the third embodiments of the present invention.

As illustrated in FIG. 10, the adhesive tape including the multilayer body 1D includes a laminate layer 40 provided on the primary surface S2 side of the support layer 10 of the multilayer body 1A, and the adhesive agent layer 30 is formed on one primary surface U2 side of the laminate layer 40. The peel strength between the multilayer body 1D and the adhesive agent layer 30 is improved when the laminate layer 40 is interposed between the support layer 10 and the adhesive agent layer 30 as described in this embodiment, rather than when the adhesive agent layer 30 is provided on the primary surface S2 of the support layer 10 like in the multilayer body 1A according to the first embodiment.

The material of the laminate layer 40 is not limited in particular as long as it is the thermoplastic resin, and the material similar to that of the laminate layer of known adhesive tapes can be used. Examples thereof include olefin polymers such as high-density polyethylene, low-density polyethylene, linear low-density polyethylene, polypropylene, and ethylene propylene block copolymer, polyesters such as polyethylene terephthalate and polybutylene terephthalate, polyamides such as nylon 6 and nylon 66, polyacrylic resin, and vinylidene chloride resin. Among these, olefin polymers are preferable, and low-density polyethylene or linear low-density polyethylene is particularly preferable. Biopolyolefins may also be used as the olefin polymers.

The adhesive tape including the multilayer body 1D may have the adhesive agent layer 30 on a part of one primary surface U2 of the laminate layer 40 of the multilayer body 1D as illustrated in FIG. 11.

### <Another Embodiment>

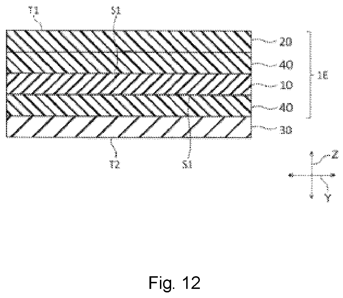

A multilayer body according to an embodiment of the present invention will be described below based on FIG. 12. FIG. 12 is a cross-sectional view of an embodiment of an adhesive tape including a multilayer body 1E according to a fourth embodiment of the present invention.

As illustrated in FIG. 12, the multilayer body 1E includes the long support layer 10, the first laminate layer 40 provided on one primary surface side S1 of the support layer 10, and the second laminate layer 40 provided on the other primary surface side S2 of the support layer 10, and the surface resin layer 20 is provided on a primary surface side opposite to the support layer side of the first laminate layer 40. The adhesive tape including the multilayer body 1E includes the adhesive agent layer 30 on the primary surface side opposite to the support layer side of the second laminate layer 40.

The adhesive tape including the multilayer body 1E illustrated in FIG. 12 is the same as the adhesive tape illustrated in FIG. 10 except the second laminate layer 40 is provided between the support layer 10 and the adhesive layer 30. Therefore, the same layers (the support layer 10, the surface resin layer 20, the adhesive agent layer 30, and the second laminate layer 40) as those in the multilayer body 1D are denoted with the same letters or numerals as those in the multilayer body 1D, and the above description about the multilayer body 1D applies. The above description about the laminate layer of the multilayer body 1D also applies to the first laminate layer.

As a modification, the adhesive tape including the multilayer body 1E according to the embodiment illustrated in FIG. 12 may have a printed layer between the first laminate layer 40 and the surface resin layer 20 (not illustrated). The printed layer is formed on the surface of the first laminate layer 40 in such a way that printing ink containing a colored pigment is applied and formed on the first laminate layer 40, and a film of the printing ink is formed. When the multilayer body includes the printed layer, the surface resin layer may be colorless and transparent.

The colored pigments are used to make the surface of the adhesive tape including the multilayer body (surface resin layer) the desired color. In addition to achromatic pigments of black, white, and gray, chromatic pigments with colors such as red, blue, green, and yellow can be used.

In addition to the colored pigments, the printing ink may contain the filler as described above.

The printed layer may be formed at one time with only one applying step to achieve the desired thickness, or the thickness may be adjusted by repeating the step of applying the printing ink with the same color multiple times with a drying step in between.

### <Another Embodiment>

Various changes can be made to the first, the second, and the third embodiments of the present invention, as well as to the modifications of the first to the third embodiments.

In the first to the fourth embodiments of the present invention, and the modifications thereof, one, or two or more additional layers may be provided between or on the top surface of the two adjacent layers. For example, an adhesive layer may be provided between the support layer 10 and the surface resin layer 20 in the first embodiment or between the support layer 10 and the laminate layer 40 in the fourth embodiment. In the first embodiment, a supplementary layer may be provided between the support layer 10 and the adhesive agent layer 30.

### [Adhesive Layer]

The adhesive layer has a function to enhance the bondability between the support layer 10 and the surface resin layer 20 or between the support layer 10 and the laminate layer 40. The adhesive layer is not limited as long as it has the function of enhancing the bondability; however, it is preferable that the adhesive layer is formed of a thermoplastic resin such as low-density polyethylene that has excellent fusibility. The adhesive layer can be formed by, for example, extrusion lamination of a thermoplastic resin such as low-density polyethylene on the surface of the laminate layer 40. The temperature of the extrusion lamination is preferably 130 to 220°C higher than the melting point of the thermoplastic resin material included in the support layer 10. By performing the lamination at the high temperature, the thermoplastic resin material in the adhesive layer penetrates into the support layer 10 and anchors the support layer 10, making it easier to cut with hands. The thickness of the adhesive layer is usually 10 µm or more and 60 µm or less, and preferably 15 µm or more and 40 µm or less. When low-density polyethylene is used for the adhesive layer, it is preferable to use the plant-derived low-density polyethylene described above.

### [Supplementary Layer]

The supplementary layer is a layer for facilitating the application of the adhesive and reinforcing the adhesive when forming the adhesive agent layer 30. For example, if the layer to which the adhesive agent is applied is uneven, such as in the case of providing the adhesive agent layer 30 on the support layer 10, the uniform application of the adhesive agent may be impossible. In such a case, it is preferable to provide a supplementary layer on the support layer 10 to even out the surface layer and apply the adhesive agent on the supplementary layer to form the adhesive agent layer 30. The supplementary layer can be formed of a thermoplastic resin such as linear low-density polyethylene or low-density polyethylene. The supplementary layer can be formed, for example, by extrusion lamination of a thermoplastic resin such as linear low-density polyethylene or low-density polyethylene on the support layer 10.

In each embodiment of the present invention and the modification thereof, layers that impart various functions may be provided. For example, a layer to improve surface properties can be provided on the primary surface T2 of the multilayer body 1A**.** Specifically, in the adhesive tape in the form of a wound body, a release layer can be provided on the primary surface T2 where the adhesive agent layer 30 is in contact, so as to reduce the peeling force (also called developing force) when rewinding. In the adhesive tape, a layer including release paper subjected to a release process can be provided as a layer with which the adhesive agent layer 30 is in contact when the adhesive tape is wound into a wound form. As the release process, the application of a silicone release agent involving a curing reaction if necessary, a fluorine release agent, a long-chain alkyl graft polymer release agent, or the like is given.

In the adhesive tape according to each embodiment of the present invention and the modification thereof, a gas-impermeable layer, such as a metal vapor deposition film or a ceramic vapor deposition film, may be provided as long as the function of the adhesive tape is not impaired.

### <Adhesive tape>

In the adhesive tape including the multilayer body according to the above embodiment, the adhesion to backing, which is the adhesive strength when the adhesive tapes are applied in the overlapping manner (i.e., peel strength when the adhesive tape is applied to a surface of an adhesion body and another adhesive tape is applied to a surface of the surface resin layer of the previous adhesive tape) is improved. In the present invention, the adhesive strength between the adhesive agent layer and the exposed face of the surface resin layer is preferably 6.5 N/25 mm or more and more preferably 7.5 N/25 mm or more when the adhesive tapes are applied in the overlapping manner.

### Examples

Examples and Comparative Examples are given below to illustrate the present invention in detail; however, the present invention is not limited to Examples below.

### [Example 1]

### [Preparation of Warp]

High-density polyethylene (density 0.958 g/cm³, melt mass flow rate 0.58 g/10 min (190°C, 2.16 g load), melting point 134°C) was deposited by an inflation molding method and the resulting film was slit by razor cutting. The film was then stretched 7 times on a hot plate at a temperature of 110 to 120°C, followed by a 6% relaxation thermal process in a hot air circulation oven at a temperature of 120°C to produce the warp yarn. The fineness was 130 dt, the flat yarn width was 0.73 mm, and the thickness was 19 µm.

### [Preparation of Weft]

High-density polyethylene (density 0.958 g/cm³, melt mass flow rate 0.58 g/10 min (190°C, 2.16 g load), melting point 134°C) was deposited by an inflation molding method and the resulting film was slit by razor cutting. The film was then stretched 7 times on a hot plate at a temperature of 110 to 120°C, followed by a 6% relaxation thermal process in a hot air circulation oven at a temperature of 120°C to produce the weft flat yarn. The fineness was 335 dt, the flat yarn width was 1.20 mm, and the thickness was 29 µm.

### [Preparation of Support Layer]

The warp and the weft obtained above were used to manufacture a plain weave fabric in which the thread count of the warp was 35 threads/inch, the thread count of the weft was 16 threads/inch, and the weight per unit area was 39.0 g/m².

### [Manufacture of Adhesive Tape]

On one face of the woven fabric (support layer) obtained as described above, low-density polyethylene (density 0.922 g/cm³, melt mass flow rate 9.4 g/10 min (190°C, 2.16 g load), melting point 110°C) containing 4.0 mass% of a master batch for synthetic resin (product name: PEX 995019 BLACK AL, manufactured by TOKYO PRINTING INK MFG. CO., LTD.) containing 40 mass% of a black pigment was extruded and laminated to form the surface resin layer. On the other face, low-density polyethylene (density 0.922 g/cm³, melt mass flow rate 9.4 g/10 min (190°C, 2.16 g load), melting point 110°C) was extruded and laminated to form the first laminate layer with a thickness of 35 µm per side, and a three-layer structure of the surface resin layer, the woven fabric (support layer), and the first laminate layer was manufactured.

Next, an embossing roll whose surface has a maximum height Rz of 5.5 µm was pressed onto the face of the surface resin layer of the resulting multilayer body at a contact pressure of 0.050 MPa to form an uneven structure on the surface of the surface resin layer. The shaping temperature at this time was set at 285°C.

A corona discharge process was performed on the face of the first laminate layer of the resulting multilayer body, and an acrylic adhesive agent was applied to the surface of the first laminate layer after the corona discharge process so as to make the thickness after drying 40 µm; thus, the adhesive tape was obtained. As the acrylic adhesive agent, an adhesive agent in which 0.2 parts by weight, in terms of the weight of a solid content, of a toluene solution of acetyl acetone aluminum, which is a metal chelate compound (N-2128, manufactured by Mitsubishi Chemical Group Corporation), was mixed as a cross-linking agent to 100 parts by weight of acrylic acid ester copolymer (N-3440, manufactured by Mitsubishi Chemical Group Corporation) was used.

### [Surface Roughness Test]

As for the obtained adhesive tape, the maximum height (Rz) of the surface resin layer on the weft yarn of the supporter was measured using a non-contact 3D shape measuring machine (Nexview, manufactured by ZYGO Corporation) under the following measurement conditions.
- Measurement environment: 23°C, 50%RH
- Lens magnification: 20 times
- Digital zoom: 0.5 times
- Scan length: 100 µm
- Type: Surface
- Mode: CSI-Rough
- Z Resolution: High

The roughness curve obtained from the measurement was divided into five sections, the distance between the peak and valley of each section was measured, and the average of these values was used as Rz. The results are shown in Table 1.

### [60-degree Specular Glossiness Test]

The 60-degree specular glossiness of the surface resin layer was measured by the method of JIS Z 8741. The results are shown in Table 1.

### [Example 2]

The adhesive tape was manufactured in a manner similar to that in Example 1 except that the contact pressure of the embossing roll was changed to 0.060 MPa, and the surface roughness test and the 60-degree specular glossiness test were conducted. The results are shown in Table 1.

### [Example 3]

The adhesive tape was manufactured in a manner similar to that in Example 1 except that the contact pressure of the embossing roll was changed to 0.075 MPa, and the surface roughness test and the 60-degree specular glossiness test were conducted. The results are shown in Table 1.

### [Example 4]

The adhesive tape was manufactured in a manner similar to that in Example 1 except that the contact pressure of the embossing roll was changed to 0.080 MPa, and the surface roughness test and the 60-degree specular glossiness test were conducted. The results are shown in Table 1.

### [Example 5]

The adhesive tape was manufactured in a manner similar to that in Example 1 except that the contact pressure of the embossing roll was changed to 0.300 MPa, and the surface roughness test and the 60-degree specular glossiness test were conducted. The results are shown in Table 1.

### [Example 6]

The adhesive tape was manufactured in a manner similar to that in Example 5 except that the surface resin layer was shaped using an embossing roll whose surface has a maximum height (Rz) of 18.0 µm, and the surface roughness test and the 60-degree specular glossiness test were conducted. The results are shown in Table 1.

### [Comparison Example 1]

The adhesive tape was manufactured in a manner similar to that in Example 5 except that the surface resin layer was shaped using an embossing roll whose surface has a maximum height (Rz) of 3.1 µm, and the surface roughness test and the 60-degree specular glossiness test were conducted. The results are shown in Table 1.

### [Comparison Example 2]

The adhesive tape was manufactured in a manner similar to that in Example 1 except that the contact pressure of the embossing roll was changed to 0.040 MPa, and the surface roughness test and the 60-degree specular glossiness test were conducted. The results are shown in Table 1.

### [Example 7]

The adhesive tape was manufactured in a manner similar to that in Example 5 except that 5.0 mass% of a master batch for synthetic resin containing 60 mass% of a white pigment (product name: PE-RM K 618 (L), white, manufactured by Dainichiseika Color & Chemicals Mfg. Co., Ltd.) was added instead of adding 4 mass% of the master batch for synthetic resin containing the black pigment, and the surface roughness test and the 60-degree specular glossiness test were conducted. The results are shown in Table 1.

### [Example 8]

The adhesive tape was manufactured in a manner similar to that in Example 6 except that 5.0 mass% of a master batch for synthetic resin containing 60 mass% of a white pigment (product name: PE-RM K 618 (L), white, manufactured by Dainichiseika Color & Chemicals Mfg. Co., Ltd.) was added instead of adding 4 mass% of the master batch for synthetic resin containing the black pigment, and the surface roughness test and the 60-degree specular glossiness test were conducted. The results are shown in Table 1.

### [Comparison Example 3]

The adhesive tape was manufactured in a manner similar to that in Example 7 except that the surface resin layer was shaped using an embossing roll whose surface has a maximum height (Rz) of 3.1 µm, and the surface roughness test and the 60-degree specular glossiness test were conducted. The results are shown in Table 1.

### [Example 9]

The adhesive tape was manufactured in a manner similar to that in Example 6 except that 4 mass% of the master batch for synthetic resin containing the black pigment was not added, and the surface roughness test and the 60-degree specular glossiness test were conducted. The results are shown in Table 1.

### [Comparison Example 4]

The adhesive tape was manufactured in a manner similar to that in Example 9 except that the surface resin layer was shaped using an embossing roll whose surface has a maximum height (Rz) of 3.1 µm, and the surface roughness test and the 60-degree specular glossiness test were conducted. The results are shown in Table 1.

### [Example 10]

The adhesive tape was manufactured in a manner similar to that in Example 9 except that the warp and the weft included in the support layer were formed using high-density polyethylene to which 2.0 wt% of a master batch for synthetic resin containing 20 mass% of a green pigment (product name: PEX 6AE489 GREEN B, manufactured by TOKYO PRINTING INK MFG. CO., LTD.) was added, and the surface roughness test and the 60-degree specular glossiness test were conducted. The results are shown in Table 1.

### [Example 11]

The adhesive tape was manufactured in a manner similar to that in Example 9 except that the warp and the weft included in the support layer were formed using high-density polyethylene to which 1.0 wt% of a master batch for synthetic resin containing 35 mass% of a blue pigment (product name: PEX 579001 BLUE, manufactured by TOKYO PRINTING INK MFG. CO., LTD.) was added, and the surface roughness test and the 60-degree specular glossiness test were conducted. The results are shown in Table 1.

### [Example 12]

The adhesive tape was manufactured in a manner similar to that in Example 9 except that the warp and the weft included in the support layer were formed using high-density polyethylene to which 3.0 wt% of a master batch for synthetic resin containing 42 mass% of a brown pigment (product name: PEX 7BD192 BROWN, manufactured by TOKYO PRINTING INK MFG. CO., LTD.) was added, and the surface roughness test and the 60-degree specular glossiness test were conducted. The results are shown in Table 1.

### [Comparison Example 5]

The adhesive tape was manufactured in a manner similar to that in Example 10 except that the surface resin layer was shaped using an embossing roll whose surface has a maximum height (Rz) of 3.1 µm, and the surface roughness test and the 60-degree specular glossiness test were conducted. The results are shown in Table 1.

### [Comparison Example 6]

The adhesive tape was manufactured in a manner similar to that in Example 11 except that the surface resin layer was shaped using an embossing roll whose surface has a maximum height (Rz) of 3.1 µm, and the surface roughness test and the 60-degree specular glossiness test were conducted. The results are shown in Table 1.

**[Table 1]**

| Measurement item | Example 1 | Example 2 | Example 3 | Example 4 | Example 5 | Example 6 | Comparative Example 1 | Comparative Example 2 | Example 7 | Example 8 | Comparative Example 3 | Example 9 | Comparative Example 4 | Example 10 | Example 11 | Example 12 | Comparative Example 5 | Comparative Example 6 |
|---|---|---|---|---|---|---|---|---|---|---|---|---|---|---|---|---|---|---|
| Hue of surface resin layer | Black | Black | Black | Black | Black | Black | Black | Black | White | White | White | Colorless | Colorless | Colorless | Colorless | Colorless | Colorless | Colorless |
| Hue of support layer | Colorless | Colorless | Colorless | Colorless | Colorless | Colorless | Colorless | Colorless | Colorless | Colorless | Colorless | Colorless | Colorless | Green | Blue | Brown | Green | Blue |
| Rz (µm) | 7.1 | 7.3 | 7.7 | 8.2 | 11 | 18.3 | 4.1 | 6.8 | 12.1 | 17.8 | 3.7 | 18.5 | 4.3 | 18.5 | 18.2 | 18 | 4.2 | 2.8 |
| Gs(60) (%) | 9.3 | 8.1 | 7.3 | 6.3 | 3.8 | 0.7 | 32.9 | 10.7 | 6.1 | 2.9 | 44.3 | 6.4 | 48.5 | 3.3 | 2.7 | 2.4 | 34.7 | 40 |

As is clear from the evaluation results in Table 1, in the adhesive tapes according to Examples 1 to 12, where the maximum height (Rz) of the surface resin layer in the multilayer body of the adhesive tape was 7.0 µm or more, the 60-degree specular glossiness was low, the matte property was excellent, and the designability was high.

On the other hand, in the adhesive tapes according to Comparative Examples 1 to 6, where the maximum height (Rz) of the surface resin layer in the multilayer body of the adhesive tape was less than 7.0 µm, the 60-degree specular glossiness was high and the designability was low.

### [Adhesion to Backing Test]

From each of the adhesive tapes obtained in Examples 1 to 6 and Comparative Examples 1 and 2, a test piece 1 was cut into a size of 50 mm wide and 200 mm long. Each test piece 1 was attached to a steel plate for a pressing board with a width of 50 mm and a length of 200 mm, with a hand roller.

Separately, a test piece 2 was prepared by cutting the adhesive tape obtained in Comparative Example 1 into a size of 25 mm wide and 200 mm long. An adhesive side of the test piece 2 was pressed onto a surface of the test piece 1, which was attached to the steel plate for the pressing board, with a roll of 2 kg reciprocating back and forth once. After that, using a tensile tester (AGS-X, 10N-10kN, manufactured by SHIMADZU CORPORATION), the overlapping application adhesive strength (N/25 mm) at n = 3 was measured under the measurement conditions of a tensile rate of 300 mm/min and a peeling angle of 180 degrees in accordance with JIS Z 0237:2000, and the average value of the peeling strength of these was obtained. The results are shown in Table 2.

**[Table 2]**

| Measurement item | Comparative Example 1 | Comparative Example 2 | Example 1 | Example 2 | Example 3 | Example 4 | Example 5 | Example 6 |
|---|---|---|---|---|---|---|---|---|
| Hue of surface resin layer | Black | Black | Black | Black | Black | Black | Black | Black |
| Hue of support layer | Colorless | Colorless | Colorless | Colorless | Colorless | Colorless | Colorless | Colorless |
| Rz (µm) | 4.1 | 6.8 | 7.1 | 7.3 | 7.7 | 8.2 | 11 | 18.3 |
| Adhesion to backing (N/25 mm) | 6.1 | 6.3 | 7.7 | 7.8 | 7.6 | 7.8 | 7.9 | 9.9 |

As is clear from the evaluation results in Table 2, in the adhesive tapes according to Examples 1 to 6, where the maximum height (Rz) of the surface resin layer in the multilayer body of the adhesive tape was 7.0 µm or more, it is understood that the adhesion to backing is high.

On the other hand, in the adhesive tapes according to Comparative Examples 1 and 2, where the maximum height (Rz) of the surface resin layer in the multilayer body of the adhesive tape was less than 7.0 µm, it is understood that the adhesion to backing is low.

### EXPLANATIONS OF LETTERS OR NUMERALS

- 1A to 1E: Multilayer body
- 10: Support layer
- 10A: Woven fabric layer
- 10B: Cross-bonded fabric layer
- 10C: Knitted fabric layer
- 20: Laminate layer
- 30: Adhesive agent layer
- F1: Warp yarn group
- F2: Weft yarn group
- 11: Warp yarn
- 12: Weft yarn
- 11A: Base layer
- 11B: Bonding layer

## Claims

1. A multilayer body comprising:
a support layer; and
a surface resin layer provided on one primary surface side of the support layer, wherein
the surface resin layer has an uneven structure in which an exposed face on a side opposite to the support layer has a maximum height (Rz) of 7.0 µm or more.

2. The multilayer body according to claim 1, wherein the exposed face of the surface resin layer on the side opposite to the support layer has a 60-degree surface glossiness of 10% or less.

3. The multilayer body according to claim 1, wherein the surface resin layer has a thickness of 20 µm or more and less than 50 µm.

4. The multilayer body according to claim 1, wherein the surface resin layer and/or the support layer contains a colored pigment and/or a dye.

5. The multilayer body according to claim 1, wherein the support layer and/or the surface resin layer includes an olefin polymer.

6. The multilayer body according to claim 1, wherein the support layer includes a fabric body in which a linear body is knitted, woven, or cross-bonded.

7. A method for manufacturing the multilayer body according to any one of claims 1 to 6, the method comprising:
extruding melted resin to one primary surface side of the support layer; and
shaping a surface of the resin with an embossing roller whose surface has a maximum height (Rz) of 4 to 20 µm before the resin is completely solidified.

8. An adhesive tape comprising:
the multilayer body according to any one of claims 1 **to** 6**;** and
an adhesive agent layer provided on a side of the multilayer body that is opposite to a face where the surface resin layer is provided.

9. The adhesive tape according to claim 8, further comprising a laminate layer provided between the support layer and the adhesive agent layer.

10. The adhesive tape according to claim 8, wherein an adhesive strength between the adhesive agent layer and the exposed face of the surface resin layer is 6.5 N/25 mm or more.
